Europäisches Patentamt

European Patent Office

Office européen des brevets

(19)

(11) **EP 1 004 164 B1**

(12) **FASCICULE DE BREVET EUROPEEN**

(45) Date de publication et mention
de la délivrance du brevet:
**05.11.2003 Bulletin 2003/45**

(51) Int Cl.⁷: **H02P 5/418**, H02P 7/622

(21) Numéro de dépôt: **98942736.4**

(86) Numéro de dépôt international:
**PCT/FR98/01801**

(22) Date de dépôt: **13.08.1998**

(87) Numéro de publication internationale:
**WO 99/009643 (25.02.1999 Gazette 1999/08)**

(54) **PROCEDE ET SYSTEME DE VARIATION ET DE REGULATION DE VITESSE D'UN MOTEUR**

VERFAHREN UND SYSTEM ZUR ÄNDERUNG UND ZUR REGELUNG DER GESCHWINDIGKEIT EINES MOTORS

METHOD AND SYSTEM FOR VARYING AND REGULATING A MOTOR SPEED

(84) Etats contractants désignés:
**DE ES GB NL SE**

(30) Priorité: **14.08.1997 FR 9710369**

(43) Date de publication de la demande:
**31.05.2000 Bulletin 2000/22**

(73) Titulaire: **SEB S.A.**
**69130 Ecully (FR)**

(72) Inventeurs:
• **ARROUBI, Mustapha**
**F-14610 Villons les Buissons (FR)**

• **LEROY, Jean-Luc, Alain, Henri**
**F-14250 Lingèvres (FR)**

(74) Mandataire: **Kiehl, Hubert et al**
**SAS Groupe SEB**
**Moulinex Département Propriété Industrielle**
**8 rue du Colonel Rémy**
**14052 Caen Cedex (FR)**

(56) Documents cités:
FR-A- 2 517 139          FR-A- 2 526 243
GB-A- 2 189 910          US-A- 5 412 303

## Description

La présente invention concerne un procédé de variation et de régulation de vitesse d'un moteur. Elle vise également un système pour la mise en oeuvre de ce procédé. Il s'agit ici plus particulièrement de moteurs alternatifs monophasés tels que des moteurs universels. Le document FR-2 517 139 décrit un tel procédé.

Les procédés actuels de régulation de vitesse d'un moteur mettent en oeuvre soit une mesure directe de la vitesse, soit une estimation de cette vitesse à partir de l'observation et la mesure de grandeurs physiques telles qu'une différence de potentiel proportionnelle à la vitesse, ou l'intensité du courant absorbé par le moteur. Dans ce dernier cas, il s'agit de prélever aux bornes d'un shunt placé en série avec le moteur une différence de potentiel proportionnelle au courant absorbé. Ce signal est ensuite intégré puis comparé avec une tension de consigne. Le résultat de cette comparaison induit un temps de retard à l'amorçage du triac, ce qui permet de compenser les variations de vitesse résultant d'une surcharge ou d'une perte de charge du moteur. Ce procédé de régulation largement répandu est notamment implémenté dans des circuits intégrés spécialisés ou dédiés à la régulation de vitesse.

Le but de la présente invention est de proposer un procédé nouveau de régulation de vitesse qui offre une plus grande souplesse d'utilisation que les procédés actuels, tout en présentant des coûts de réalisation moindres.

Cet objectif est atteint avec un procédé pour faire varier et réguler la vitesse d'un moteur alimenté à partir d'une source de tension alternative via des moyens interrupteurs commandés pour appliquer à ce moteur une tension de forme d'onde variable, comprenant un réglage des instants périodiques d'amorçage desdits moyens interrupteurs commandés.

Suivant l'invention, ce procédé comprend en outre, au moins une fois par période de la tension alternative, les étapes suivantes:

- on calcule une quantité de surface correspondant au courant absorbé dans une fenêtre temporelle définie entre un instant d'établissement du courant et un instant suivant d'extinction de ce courant;
- on calcule une durée du prochain temps de blocage des moyens interrupteurs commandés,
- et on commande l'amorçage desdits moyens interrupteurs à l'issue de ce temps de blocage.

On obtient ainsi avec le procédé selon l'invention une meilleure fiabilité dans la prise en compte de la grandeur physique que constitue l'intensité du courant absorbé par le moteur. Ce procédé offre en outre la possibilité de gérer un clavier, un afficheur, ou tout autre organe ou fonction de sécurité. On peut ainsi prévoir une possibilité de réglage de la vitesse par utilisation d'un clavier à touches. Des vitesses ou des séquences de fonctionnement peuvent être préprogrammées. Le procédé de régulation selon l'invention peut être mis en oeuvre pour de faibles vitesses. On peut en outre prévoir une limitation du courant de charge maximum et une détection de l'état du triac (en court-circuit ou en circuit ouvert). Il est à noter que la régulation de vitesse procurée par le procédé selon l'invention s'avère plus performante que celle obtenue avec les procédés de régulation actuels.

Le calcul de la quantité de surface est de préférence réalisé de la façon suivante:

- on prélève une pluralité d'échantillons de l'intensité du courant absorbé par le moteur, dans une fenêtre temporelle comprise entre un instant d'établissement du courant et un instant d'extinction de ce courant;
- on calcule des éléments de surface à partir des échantillons prélevés; et
- on effectue une somme de ces éléments de surface pour déterminer une quantité de surface correspondant au courant absorbé par le moteur pendant une phase de conduction des moyens interrupteurs commandés.

Dans une forme de réalisation avantageuse du procédé selon l'invention, on calcule une durée préliminaire t' du prochain temps de blocage des moyens interrupteurs commandés en appliquant la relation suivante:

$$t' = \frac{T_v}{2} - k_v . P_I$$

où

$T_v$ est la période de la tension alternative d'alimentation,

$k_v$ est un facteur de proportionnalité lié au type de moteur et à la vitesse désirée, et

$P_I$ est un paramètre associé à la quantité de surface calculée.

Pour des régimes de fonctionnement dans lesquels il n'y a pas de relation linéaire entre les paramètres de quantité de surface et de temps de blocage, le paramètre $P_I$ est alors avantageusement utilisé comme pointeur d'une zone mémoire contenant des valeurs de temps de blocage t' correspondant à des valeurs de quantité de surface.

Lorsque cette linéarité est sensiblement vérifiée, on prend alors pour le paramètre $P_I$ la quantité de surface $S_I$.

Pour des régimes transitoires dans lesquels le moteur requiert un supplément d'énergie, le procédé selon l'invention comprend en outre de préférence une correction de la durée de chaque prochain temps de blocage correspondant à une différence entre le prochain temps de biocage $t^+$ et le dernier temps de blocage appliqué $t^-$ limitée à une fraction prédéterminée f de la différence entre le nouveau temps de blocage calculé t' et le dernier temps de blocage appliqué $t^-$.

De plus, on prévoit un calcul d'un coefficient de correction énergétique C en appliquant la relation:

$$C = 2(1,5 - \sin(2.\pi.\frac{t^+}{T_V}))$$

et on divise alors la fraction prédéterminée f par ce coefficient de correction énergétique C.

Par contre, pour des régimes transitoires correspondant à une décroissance des temps de conduction des moyens interrupteurs commandés, on peut prévoir d'appliquer directement le nouveau temps de blocage calculé.

La quantité de surface $S_I$ peut être calculée en appliquant la relation suivante:

$$S_I = \left( \frac{I_1 + I_n}{2} + \sum_{j=2}^{j=(n-1)} I_j \right)$$

où

$I_I$, $I_j$, ... $I_n$ représentent les échantillons de l'intensité du courant absorbé.

Suivant un autre aspect de l'invention, il est proposé un système pour réguler la vitesse d'un moteur alimenté à partir d'une source de tension alternative via des moyens interrupteurs commandés pour appliquer à ce moteur une tension de forme d'onde variable, pour la mise en oeuvre du procédé selon l'invention, ce système comprenant:

- des moyens pour déterminer des instants périodiques d'amorçage desdits moyens interrupteurs commandés,
- des moyens pour fournir des signaux de commande d'amorçage auxdits moyens interrupteurs commandés, et
- des moyens pour mesurer le courant absorbé par le moteur.

Suivant l'invention, ce système comprend en outre des moyens de contrôle et de traitement agencés pour:

- calculer une quantité de surface correspondant au courant absorbé dans une fenêtre temporelle définie entre un instant d'établissement du courant et un instant suivant d'extinction de ce courant;
- calculer une durée du prochain temps de blocage des moyens interrupteurs commandés, et
- commander l'amorçage desdits moyens interrupteurs à l'issue de ce temps de blocage.

D'autres particularités et avantages de l'invention apparaîtront encore dans la description ci-après. Aux dessins annexés donnés à titre d'exemples non limitatifs:

- la figure 1 est un schéma synoptique d'un premier exemple de réalisation d'un système de régulation de vitesse selon l'invention;
- la figure 2 est un schéma synoptique d'un second exemple de réalisation d'un système de régulation de vitesse selon l'invention; et
- la figure 3 est un chronogramme incluant plusieurs formes d'onde caractéristiques observées avec le procédé de régulation selon l'invention.

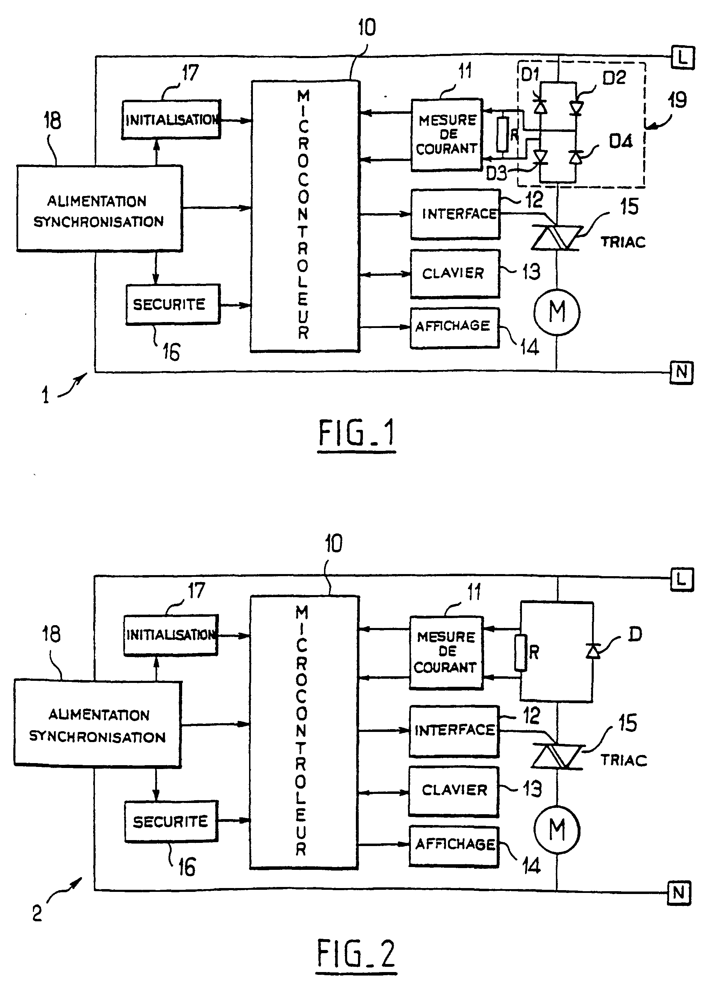

On va maintenant décrire deux exemples de réalisation d'un système de régulation selon l'invention, en référence aux figures 1 et 2.

Un système de régulation 1 selon l'invention est destiné à réguler la vitesse d'un moteur M, par exemple un moteur universel, alimenté à tension variable à partir d'une source alternative monophasée (L, N) au moyen d'un triac 15. Pour la mesure du courant, un montage redresseur double alternance 19, constitué classiquement de quatre diodes D1-D4 en pont, est disposé en série avec le triac 15 et le moteur M, et une résistance R est reliée en sortie de ce montage redresseur. La tension aux bornes de cette résistance fournit une image du courant traversant le moteur M.

Le système de régulation 1 est construit autour d'un microcontrôleur 10 alimenté par un module d'alimentation et de synchronisation 18 relié à la source alternative (L, N). Le microcontrôleur 10 reçoit en entrée un signal provenant d'un module d'initialisation commandé par le module d'alimentation et de synchronisation 18, et un signal provenant d'un module de sécurité 16.

Le système de régulation 1 comprend en outre un module 11 de mesure de courant recevant en entrée la tension aux bornes de la résistance R et procurant au microcontrôleur 10 un signal d'entrée représentatif au courant absorbé, un module 12 d'interface de commande du triac 15 recevant un signal de commande émis par le microcontrôleur 10, un clavier 13, et un module d'affichage 14. Le microcontrôleur 10 inclut une fonction de conversion analogique-numérique mise en oeuvre pour générer en interne une représentation numérique du courant absorbé.

On peut aussi envisager, en référence à la figure 2 dans laquelle les composants et modules communs à la figure 1 sont repérés par des références communes, une autre configuration pour la mesure du courant absorbé au sein d'un système 2 de régulation de vitesse selon l'invention. Dans cette autre configuration, on réalise au moyen d'une seule diode D un redressement simple alternance de la tension aux bornes de la résistance R.

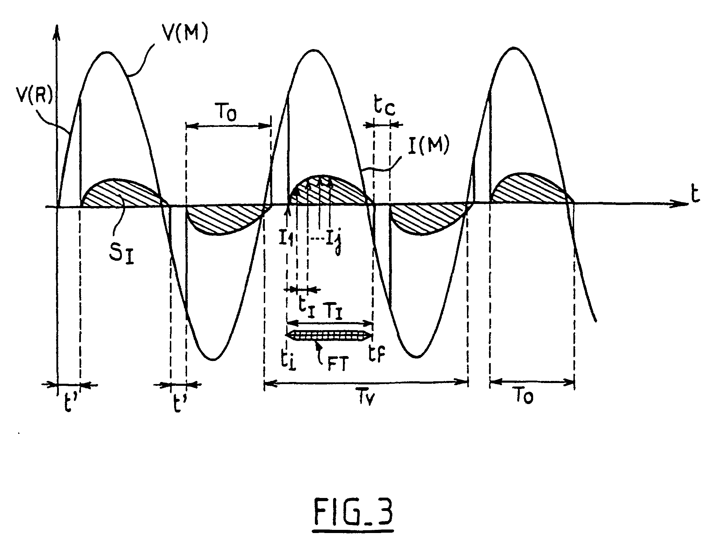

On va maintenant décrire un exemple d'implémentation du procédé de régulation selon l'invention, notamment en référence à la figure 3. Ce procédé comprend tout d'abord une séquence de calcul de la quantité de surface $S_l$, qui comporte les étapes suivantes:

- un prélèvement d'un nombre n d'échantillons de l'intensité du courant absorbé par le moteur, entre un instant $t_i$ d'établissement du courant et un instant $t_f$ d'extinction du courant,
- un calcul d'éléments de surface,
- une sommation des éléments de surface,
- un calcul de la quantité de surface SI.

S'agissant des échantillons de courant, la période d'échantillonnage $t_l$ est par exemple choisie égale à 50 µs. Les échantillons sont prélevés entre l'instant $t_i$ d'établissement du courant et l'instant $t_f$ d'extinction du courant pendant une durée d'échantillonnage $T_l$. Le nombre n d'échantillons prélevés sur cette durée peut être déterminé par la relation:

$$n = \frac{T_l}{t_l} + 1$$

Le calcul des éléments de surface $s_1, .., s_{(n-1)}$ est effectué de la façon suivante:

$$s_1 = t_l \frac{I_1 + I_2}{2}$$

$$s_{(n-1)} = t_l \frac{I_{(n-1)} + I_n}{2}$$

On effectue ensuite la somme de tous les éléments de surface ainsi calculés:

$$S_{l_l} = \sum_{e=1}^{e=(n-1)} s_e$$

ou encore

$$S_{l_l} = t_l \left( \frac{I_1 + I_n}{2} + \sum_{j=2}^{j=(n-1)} I_j \right)$$

La précision de la mesure de surface dépend de la valeur de la période d'échantillonnage $t_l$. Cette précision est d'autant plus élevée que la période d'échantillonnage est petite. Par ailleurs, cette période d'échantillonnage est en pratique choisie constante, ce qui permet de traiter une quantité de surface $S_l$ ne faisant plus référence au paramètre $t_l$.

La quantité de surface $S_l$ peut alors être exprimée de la façon suivante:

$$S_I = \left( \frac{I_1 + I_n}{2} + \sum_{j=2}^{j=(n-1)} I_j \right)$$

On va maintenant décrire un mode de calcul du temps de retard à l'amorçage du triac 15. Le démarrage du moteur M est effectué de manière progressive jusqu'à ce que la quantité de surface atteigne une valeur minimum $S_{Imin}$. Au delà de cette valeur, le procédé de régulation selon l'invention entre en action en effectuant les opérations suivantes:

- a) un calcul de la quantité de surface $S_I$ à chaque période du secteur ou à chaque demi-alternance;
- b) un calcul de la durée préliminaire du prochain temps de blocage du triac (t') en appliquant la relation suivante:

$$t' = \frac{T_v}{2} - k_v \cdot P_I$$

où $k_v$ est un facteur de proportionnalité lié au type de moteur et à la vitesse désirée, et
$P_I$ est un paramètre représentatif de la quantité de surface $S_I$,
et dans le cas d'une variation progressive des temps de blocage,
- c) un calcul d'un coefficient C de correction énergétique, et
- d) un calcul du temps de blocage effectivement appliqué au triac.

Le paramètre $P_I$ correspond à $S_I$, dans les régimes de fonctionnement pour lesquels la linéarité entre les paramètres t' et la quantité de surface $S_I$ est vérifiée. Dans le cas contraire, le paramètre $P_I$ est utilisé comme pointeur d'une zone mémoire contenant des temps de blocage t'.
En régime linéaire, le temps de blocage t' peut être déterminé par la relation suivante:

$$t' = \frac{T_v}{2} - k_v \left( \frac{I_1 + I_n}{2} + \sum_{j=2}^{j=(n-1)} I_j \right)$$

En pratique, afin d'éviter tout phénomène de pompage du moteur, la correction du temps d'amorçage du triac est effectuée de la façon suivante:

- par approches successives dans le sens croissant des temps de conduction du triac;
- brutalement dans le sens décroissant des temps de conduction du triac.

En effet, si le moteur a besoin d'être sous-alimenté, le nouveau temps d'amorçage peut être appliqué directement sans précaution particulière. L'inertie du moteur amortit généralement les éventuels battements de vitesse.
Par contre, si le moteur a besoin d'un supplément d'énergie, le nouveau temps d'amorçage du triac est introduit de manière progressive. Pour cela, le système calcule une fraction prédéterminée f, par exemple le huitième, de la différence entre le dernier temps $t^-$ de blocage du triac et le nouveau temps de blocage calculé t'. La différence entre le dernier temps de blocage appliqué $t^-$ et la fraction ainsi calculée donne le prochain temps provisoire $t^+$ de blocage du triac. On obtient ainsi pour le temps provisoire de blocage $t^+$ la relation suivante:

$$t^+ = t^- + f(t' - t^-)$$

$$t^+ = t^-(1-f) + (f \cdot t')$$

ou encore,

$$t^{+} = t^{-}(1-f) + f\left(\frac{T_v}{2} - k_v\left(\frac{I_1 + I_n}{2} + \sum_{j=2}^{j=(n-1)} I_j\right)\right)$$

Le calcul du coefficient de correction énergécique C est effectué en appliquant la relation suivante:

$$C = 2(1,5 - \sin(2.\pi.\frac{t^+}{T_V}))$$

La mise en oeuvre de ce coefficient de correction énergétique permet d'apporter au moteur une énergie proportionnelle au temps de conduction du triac, indépendamment de la position de celui-ci sur la sinusoïde.

Le temps final $t_c$ de blocage du triac est alors:

$$t_c = \left(\frac{C-f}{C}\right)t^{-} + \frac{f}{C}\left(\frac{T_v}{2} - k_v\left(\frac{I_1 + I_n}{2} + \sum_{j=2}^{j=(n-1)} I_j\right)\right)$$

L'expression complète de ce temps de blocage $t_c$, en fonction des échantillons d'intensité de courant et du temps de blocage précédent $t^{-}$, est donnée ci-dessous:

$$t_c = \left(2\left(1,5 - \sin 2.\Pi.(T_v)^{-1}\left(t^{-}(1-f) + f\left(\frac{T_v}{2} - k_v\left(\frac{I_1 + I_n}{2} + \sum_{j=2}^{j=(n-1)} I_j\right)\right)\right)\right)\right)^{(-1)} \times$$

$$\left(\left(\left(2\left(1,5 - \sin 2.\Pi.(T_v)^{-1}\left(t^{-}(1-f) + f\left(\frac{T_v}{2} - k_v\left(\frac{I_1 + I_n}{2} + \sum_{j=2}^{j=(n-1)} I_j\right)\right)\right)\right)\right) - f\right)t^{-} + f\left(\frac{T_v}{2} - k_v\left(\frac{I_1 + I_n}{2} + \sum_{j=2}^{j=(n-1)} I_j\right)\right)\right)$$

Ce calcul peut être implémenté sans difficulté dans un microcontrôleur 8 bits tel que le microcontrôleur 8051 de la compagnie Intel.

Il est à noter que les étapes du procédé qui viennent d'être décrites sont reproduites de façon cyclique, à chaque alternance ou demi-alternance de la tension d'alimentation. Les temps de calcul requis par le microcontrôleur pour exécuter ces étapes sont en pratique négligeables devant la période de l'onde de tension d'alimentation. Une conversion analogique-numérique sur 8 bits des mesures de courant absorbé est en principe suffisante pour obtenir une régulation correcte d'un moteur.

Bien sûr, l'invention n'est pas limitée aux exemples qui viennent d'être décrits et de nombreux aménagements peuvent être apportés à ces exemples sans sortir du cadre de l'invention, qui est limitée par les revendications suivantes.

**Revendications**

1. Procédé pour faire varier et réguler la vitesse d'un moteur (M) alimenté à partir d'une source de tension alternative (L, N) via des moyens interrupteurs (15) commandés pour appliquer à ce moteur (M) une tension de forme d'onde variable (v(M)), comprenant un réglage des instants périodiques d'amorçage desdits moyens interrupteurs commandés (15),
   **caractérisé en ce qu'**il comprend en outre, au moins une fois par période de la tension alternative, les étapes suivantes:

   - on calcule une quantité de surface $(S_l)$ correspondant au courant absorbé (I(M)) dans une fenêtre temporelle (FT) définie entre un instant $(t_i)$ d'établissement du courant et un instant $(t_f)$ suivant d'extinction de ce courant;
   - on calcule une durée du prochain temps (t') de blocage des moyens interrupteurs commandés (15),
   - et on commande l'amorçage desdits moyens interrupteurs (15) à l'issue de ce temps de blocage (t').

**2.** Procédé selon la revendication 1, **caractérisé en ce que** pour le calcul de la quantité de surface ($S_I$),

- on prélève une pluralité d'échantillons ($I_I..I_j..I_n$) de l'intensité du courant ($I(M)$) absorbé par le moteur ($M$), dans une fenêtre temporelle ($FT$) comprise entre un instant ($t_i$) d'établissement du courant et un instant ($t_f$) d'extinction de ce courant;
- on calcule des éléments de surface ($s_1,.., s_{n-1}$) à partir des échantillons prélevés,
- on effectue une somme de ces éléments de surface ($s_1, .., s_{n-1}$) pour déterminer une quantité de surface ($S_I$) correspondant au courant absorbé ($I(M)$) par le moteur ($M$) pendant une phase de conduction des moyens interrupteurs commandés (15).

**3.** Procède selon l'une des revendications 1 ou 2, **caractérisé en ce qu'**on calcule une durée préliminaire t' du prochain temps de blocage des moyens interrupteurs commandés (15) en appliquant la relation suivante:

$$t' = \frac{T_v}{2} - k_v.P_I$$

où

$T_v$ est la période de la tension alternative d'alimentation,

$k_v$ est un facteur de proportionnalité lié au type de moteur et à la vitesse désirée, et

$P_I$ est un paramètre associé à la quantité de surface calculée.

**4.** Procédé selon la revendication 3, **caractérisé en ce que** le paramètre ($P_I$) est utilisé comme pointeur d'une zone mémoire contenant des valeurs temps de blocage t' correspondant à des valeurs de quantité de surface ($S_I$).

**5.** Procédé selon la revendication 3, correspondant à des régimes de fonctionnement dans lesquels la linéarité entre les paramètres respectivement de temps de blocage (t') et de quantité de surface ($S_I$) est sensiblement vérifiée, **caractérisé en ce que** le paramètre ($P_I$)est sensiblement égal à la quantité de surface ($S_I$).

**6.** Procédé selon l'une des revendications 3 à 5, **caractérisé en ce que**, pour des régimes transitoires dans lesquels le moteur requiert un supplément d'énergie, il comprend en outre une correction de la durée de chaque prochain temps de blocage (t'), cette correction correspondant à une différence entre le prochain temps de blocage ($t^+$) et le dernier temps de blocage appliqué ($t^-$) qui est limitée à une fraction prédéterminée (f) de la différence entre le nouveau temps de blocage calculé (t') et le dernier temps de blocage appliqué ($t^-$).

**7.** Procédé selon la revendication 6, **caractérisé en ce qu'**il comprend en outre un calcul d'un coefficient de correction énergétique (C) en appliquant la relation:

$$C = 2(1,5 - \sin(2.\pi.\frac{t^+}{T_V}))$$

et **en ce qu'**on divise la fraction prédéterminée (f) par ce coefficient de correction énergétique (C).

**8.** Procédé selon l'une des revendication 3 à 5, **caractérisé en ce que**, pour des régimes transitoires correspondant à une décroissance des temps de conduction des moyens interrupteurs commandés (15), on applique directement le nouveau temps de blocage calculé (t').

**9.** Procédé selon l'une quelconque des revendications 2 à 8, **caractérisé en ce que** la quantité de surface ($S_I$) est calculée en appliquant la relation suivante:

$$S_I = \left( \frac{I_1 + I_n}{2} + \sum_{j=2}^{j=(n-1)} I_j \right)$$

où

$I_I$, $I_j$, ... $I_n$ représentent les échantillons de l'intensité du courant absorbé.

**10.** Système (1, 2) pour réguler la vitesse d'un moteur (M) alimenté à partir d'une source de tension alternative (L, N) via des moyens interrupteurs (15) commandés pour appliquer à ce moteur (M) une tension de forme d'onde variable, pour la mise en oeuvre du procédé selon l'une quelconque des revendications précédentes, ce système comprenant:

- des moyens pour déterminer des instants périodiques d'amorçage desdits moyens interrupteurs commandés,
- des moyens pour fournir des signaux de commande d'amorçage auxdits moyens interrupteurs commandés, et
- des moyens (R, 11, 19) pour mesurer le courant (I(M)) absorbé par le moteur (M),

**caractérisé en ce qu'**il comprend en outre des moyens de contrôle et de traitement (10) agencés pour:

- calculer une quantité de surface (S$_l$) correspondant au courant absorbé dans une fenêtre temporelle (FT) définie entre un instant (t$_i$) d'établissement du courant et un instant suivant (t$_f$) d'extinction de ce courant;
- calculer une durée du prochain temps de blocage (t', t$_c$) des moyens interrupteurs commandés (15), et
- commander un amorçage desdits moyens interrupteurs (15) à l'issue de ce temps de blocage (t', t$_c$).

**Patentansprüche**

**1.** Verfahren zur Änderung und Regelung der Geschwindigkeit eines Motors (M), der von einer Wechselstromquelle (L, N) über eine Schaltvorrichtung (15) gespeist ist, welche so gesteuert ist, daß sie diesem Motor (M) eine Spannung von veränderlicher Wellenform (v(M)) liefert, mit einer Regelung der periodischen Zeitpunkte der Auslösung der gesteuerten Schaltvorrichtung (15), **dadurch gekennzeichnet, daß** es außerdem mindestens einmal pro Periode der Wechselspannung die folgenden Stufen aufweist:

- Berechnung einer Flächengröße (S$_1$) entsprechend einem Strom (I(M)), der in einem Zeitfenster (FT) aufgenommen wurde, das zwischen einem Zeilpunkt (t$_i$) des Beginns des Stromflusses und einem folgenden Zeitpunkt (t$_f$) der Löschung dieses Stroms liegt, definiert ist;
- Berechnung einer Dauer der nächsten Sperrzeit (t') der gesteuerten Schaltvorrichtung (15), und
- Steuerung der Auslösung der Schaltvorrichtung (15) am Ende dieser Sperrzeit (t').

**2.** Verfahren nach Anspruch 1, **dadurch gekennzeichnet, daß** für die Berechnung der Flächengröße (S$_l$)

- eine Mehrzahl von Proben (I$_I$ ... I$_J$ ... I$_n$) der Stromstärke (I(M)) genommen werden, die vom Motor (M) in einem Zeitfenster (FT) aufgenommen wird, das zwischen einem Zeitpunkt (t$_i$) des Beginns des Stromflusses und einem Zeitpunkt (t$_f$) der Löschung dieses Stroms liegt;
- Flächenelemente (s$_1$, ..., s$_{n-1}$) aus den abgenommenen Proben berechnet werden,
- eine Summe dieser Flächenelemente (s$_1$, .., s$_{n-1}$) berechnet wird, um eine Flächengröße (S$_l$) zu bestimmen, welche den vom Motor (M) während einer Leitungsphase der gesteuerten Schaltvorrichtung (15) aufgenommenen Strom entspricht.

**3.** Verfahren nach einem der Ansprüche 1 oder 2, **dadurch gekennzeichnet, daß** eine vorläufige Dauer (t') der nächsten Sperrzeit der gesteuerten Schaltvorrichtung (15) berechnet wird durch Anwendung der folgenden Beziehung:

$$t' = \frac{T_v}{2} - k_v \cdot P_l$$

worin
T$_v$ die Periode der Speisewechselspannung ist,
k$_v$ ein Proportionalitätsfaktor ist, der mit dem Typ des Motors und der gewünschten Geschwindigkeit zusammenhängt, und
P$_l$ ein Parameter ist, der zur berechneten Flächengröße gehört.

**4.** Verfahren nach Anspruch 3, **dadurch gekennzeichnet, daß** der Parameter (P$_l$) als Anzeiger einer Speicherzone verwendet wird, welche Werte der Sperrzeiten (t') enthält, welche Werten der Flächengröße (S$_l$) entsprechen.

5. Verfahren nach Anspruch 3 für Betriebszustände, in denen die Linearität zwischen den Parametern der Sperrzeit (t') und der Flächengröße ($S_I$) im wesentlichen verifiziert ist, **dadurch gekennzeichnet, daß** der Parameter ($P_I$) im wesentlichen gleich der Flächengröße ($S_I$) ist.

6. Verfahren nach einem der Ansprüche 3 bis 5, **dadurch gekennzeichnet, daß** für Übergangszustände, in denen der Motor eine zusätzliche Energie benötigt, außerdem eine Korrektur der Dauer jeder nächsten Sperrzeit (t') erfolgt, wobei diese Korrektur einer Differenz zwischen der nächsten Sperrzeit ($t^+$) und der letzten angewandten Sperrzeit ($t^-$) entspricht, die begrenzt ist auf einen vorbestimmten Bruchteil (f) der Differenz zwischen der neuen berechneten Sperrzeit (t') und der letzten angelegten Sperrzeit (t).

7. Verfahren nach Anspruch 6, **dadurch gekennzeichnet, daß** es außerdem eine Berechnung eines Energiekorrekturkoeffizienten (C) umfaßt, indem die Beziehung:

$$C = 2(1{,}5 - \sin(2.\pi.\frac{t^+}{T_V}))$$

angewandt wird und indem der vorbestimmte Bruchteil (f) durch diesen Energiekorrekturkoeffizienten (C) dividiert wird.

8. Verfahren nach einem der Ansprüche 3 bis 5, **dadurch gekennzeichnet, daß** für Übergangszustände, die einer Abnahme der Leitungszeiten der gesteuerten Schaltvorrichtung (15) entsprechen, direkt die neue berechnete Sperrzeit (t') angewandt wird.

9. Verfahren nach einem der Ansprüche 2 bis 8, **dadurch gekennzeichnet, daß** die Flächengröße ($S_I$) unter Anwendung der folgenden Beziehung berechnet wird:

$$S_I = \left( \frac{I_1 + I_n}{2} + \sum_{j=2}^{j=(n-1)} I_J \right)$$

worin
$I_I$, $I_J$, ... $I_n$ die Proben der aufgenommenen Stromstärke repräsentieren.

10. System (1, 2) zur Regelung der Geschwindigkeit eines Motors (M), der von einer Wechselstromquelle (L, N) über eine Schaltvorrichtung (15) gespeist wird, die so gesteuert ist, daß sie diesem Motor (M) eine Spannung von veränderlicher Wellenform liefert, um das Verfahren nach einem der vorangehenden Ansprüche durchzuführen, wobei dieses System umfaßt:

- eine Vorrichtung zur Bestimmung der periodischen Zeitpunkte der Auslösung der gesteuerten Schaltvorrichtung;
- eine Vorrichtung um der gesteuerten Schaltvorrichtung Signale der Steuerung der Auslösung zu liefern, und
- eine Vorrichtung (R, 11, 19) zur Messung des vom Motor (M) aufgenommenen Stroms (I(M)), **dadurch gekennzeichnet, daß** es außerdem Vorrichtungen zur Steuerung und Behandlung (10) umfaßt, die eingerichtet sind zur
- Berechnung einer Flächengröße ($S_I$) entsprechend dem Strom, der in einem Zeitfenster (FT) aufgenommen wurde, das definiert ist zwischen einem Zeitpunkt ($t_i$) des Beginns des Stromflusses und einem folgenden Zeitpunkt ($t_f$) der Löschung dieses Stroms;
- Berechnung einer Dauer der nächsten Sperrzeit (t', $t_c$), der gesteuerten Schaltvorrichtung (15) und
- Steuerung einer Auslösung der Schaltvorrichtung (15) am Ende dieser Sperrzeit (t', $t_c$).

**Claims**

1. Method for varying and regulating the speed of a motor (M) supplied from an AC voltage source (L, N) via switch means (15) controlled so as to apply to this motor (M) a voltage with a variable waveform (v(M)), comprising a regulation of the periodic times of initiating the said controlled switch means (15),

**characterised in that** it also comprises, at least once per period of the AC voltage, the following steps:

- there is calculated a quantity of surface area ($S_l$) corresponding to the absorbed current ($I(M)$) in a time window (FT) defined between a time ($t_i$) of establishing the current and a time ($t_f$) following the extinction of this current;

- there is calculated a duration of the next time ($t'$) of switching off the controlled switch means (15),

- and the initiation of the said switch means (15) is demanded at the end of this switching-off time ($t'$).

2. Method according to Claim 1, **characterised in that**, for calculating the quantity of surface area ($S_l$),

- a plurality of samples ($I_1..I_j..I_n$) of the intensity of the current ($I(M)$) absorbed by the motor (M) are taken, in a time window (FT) included between a time ($t_i$) of establishing the current and a time ($t_f$) of extinguishing this current;

- surface area elements ($s_1, ..., s_{n-1}$) are calculated from the samples taken,

- a sum of these surface elements ($s_1, ..., s_{n-1}$) is effected in order to determine a quantity of surface area ($S_l$) corresponding to the current ($I(M)$) absorbed by the motor (M) during a conduction phase of the controlled switch means (15).

3. Method according to one of Claims 1 or 2, **characterised in that** a preliminary duration $t'$ of the next time of switching off the controlled switch means (15) is calculated by applying the following equation:

$$t' = \frac{T_v}{2} - k_v.P_l$$

where
$T_v$ is the period of the AC supply voltage,
$k_v$ is a proportionality factor related to the type of motor and to the required speed, and
$P_l$ is a parameter associated with the quantity of surface area calculated.

4. Method according to Claim 3, **characterised in that** the parameter ($P_l$) is used as a pointer for a memory area containing switching-off time values $t'$ corresponding to surface area quantity values ($S_l$).

5. Method according to Claim 3, corresponding to operating regimes in which the linearity between the parameters respectively of switching-off time ($t'$) and of the surface area quantity ($S_l$) is substantially satisfied, **characterised in that** the parameter ($P_l$) is substantially equal to the quantity of surface area ($S_l$).

6. Method according to one of Claims 3 to 5, **characterised in that**, for transient regimes in which the motor requires additional energy, it also comprises a correction to the duration of each next switching-off time ($t'$), this correction corresponding to a difference between the next switching-off time ($t^+$) and the last switching-off time applied ($t^-$) which is limited to a predetermined fraction (f) of the difference between the new switching-off time calculated ($t'$) and the last switching-off time applied ($t^-$).

7. Method according to Claim 6, **characterised in that** it also comprises a calculation of a coefficient of energy correction (C) by applying the equation:

$$C = 2\left(1.5 - \sin\left(2.\pi.\frac{t^+}{T_v}\right)\right)$$

and **in that** the predetermined fraction (f) is divided by this coefficient of energy correction (C).

8. Method according to one of Claims 3 to 5, **characterised in that**, for transient regimes corresponding to a decrease in the conduction times of the controlled switch means (15), the new calculated switching-off time (t') is applied directly.

9. Method according to any one of Claims 2 to 8, **characterised in that** the quantity of surface area ($S_I$) is calculated by applying the following equation:

$$S_I = \left( \frac{I_1 + I_n}{2} + \sum_{j=2}^{j=(n-1)} I_j \right)$$

where
$I_1$, $I_j$, ... $I_n$ represent the samples of the intensity of the absorbed current.

10. System (1, 2) for regulating the speed of a motor (M) supplied from an AC voltage source (L, N) via switch means (15) controlled so as to apply to this motor (M) a voltage with a variable waveform, for implementing the method according to any one of the preceding claims, this system comprising:

- means for determining periodic times of initiation of the said controlled switch means,

- means for supplying initiation control signals to the said controlled switch means, and

- means (R, 11, 19) for measuring the current (I(M)) absorbed by the motor (M),

**characterised in that** it also comprises control and processing means (10) arranged so as to:

- calculate a quantity of surface area ($S_I$) corresponding to the current absorbed in a time window (FT) defined between a time ($t_i$) of establishing the current and a time ($t_f$) following the extinction of this current;

- calculating a duration of the next switching-off time (t', $t_c$) of the controlled switch means (15), and

- controlling an initiation of the said switch means (15) at the end of this switching-off time (t', $t_c$).

FIG.1

FIG.2

$$\underline{FIG\_3}$$